# EUROPÄISCHE PATENTSCHRIFT

(11) **EP 0 537 653 B1**
(45) Veröffentlichungstag und Bekanntmachung des Hinweises auf die Patenterteilung: **25.01.1995**
(21) Anmeldenummer: 92117362.1
(22) Anmeldetag: 10.10.1992
(51) Int. Cl.: F16B 13/06

(54) **Ankerbolzen**
Anchor bolt
Boulon d'ancrage

(30) Priorität: 18.10.1991 DE 4134595; 07.04.1992 DE 4211565
(43) Veröffentlichungstag der Anmeldung: 21.04.1993
(73) Patentinhaber: Hainke, Elisabeth, D-33659 Bielefeld (DE)
(72) Erfinder: Hainke, Hans Ulrich, W-4800 Bielefeld 12 (DE); Hainke, Elisabeth, W-4800 Bielefeld 12 (DE)
(74) Vertreter: Schirmer, Siegfried, Dipl.-Ing.

(56) Entgegenhaltungen:
- EP-A- 0 008 085
- EP-A- 0 008 085
- FR-A- 2 090 979
- GB-A- 444 623
- GB-A- 886 118
- US-A- 2 403 330
- US-A- 3 094 892
- US-A- 3 596 948

## Beschreibung

Die Erfindung betrifft einen Ankerbolzen zur Verankerung in einer Bohrung eines beliebigen Bauteils, mit einem Spannbolzen, der einen Gewindeabschnitt und einen anschließenden kegelstumpfförmigen Kopfabschnitt aufweist, sowie mit einer einen polygonalen Querschnitt aufweisenden Spreizhülse mit einem Innengewindeabschnitt und einem angrenzenden, beim Eindrehen des Spannbolzens in den Innengewindeabschnitt der Spreizhülse durch den kegelstumpfförmigen Kopfabschnitt des Spannbolzens sektorförmig spreizbaren Verankerungsabschnitt, wobei im Mittel bereich jeder Seite des Polygonals eine achsparallele Sollbruchlinie angeordnet ist.

Ein Ankerbolzen der aufgezeigten Gattung ist aus EP-A-0 008 085 bekannt. Durch den polygonalen Querschnitt der Spreizhülse wird ein Mitdrehen der Spreizhülse im Bohrloch beim Spannen des Spannbolzens verhindert. Die vorhandenen scharfen Kanten der Spreizhülse erleichtern das Eindringen in das Material der Bohrungswand und damit die Verankerung der Spreizhülse in der Bohrung.

Der Erfindung liegt die Aufgabe zugrunde, bei einem Ankerbolzen der aufgezeigten Gattung die Verankerung der Spreizhülse im Bohrloch zu verbessern, wodurch größere Kräfte auch bei einem Einsatz in dünnen Bauelementen aufnehmbar sind.

Diese Aufgabe wird erfindungsgemüß dadurch gelöst, daß die durch die Sollbruchlinie voneinander getrennten Teilseitenflächen der Spreizhülse jeweils von der Sollbruchlinie ausgehend nach außen zueinander unter einem stumpfen Winkel ansteigend verlaufen, wobei die Außenfläche der Spreizhülse wendelförmig gezogen sein kann. In Ausgestaltung der Erfindung ist auf dem Umfang der Spreizhülse mindestens eine ringförmig verlaufende Sollbiegelinie bzw.- kerbe angeordnet. Vorteilhafterweise weist die Sollbiegelinie dreieckförmigen Querschnitt auf, wobei sie eine senkrecht zur Mantelfläche der Spreizhülse verlaufende Kathete aufweist.

Nach einer weiteren Ausbildung der Erfindung ist der Spreizhülse und dem Spannbolzen eine mit einer Haltescheibe versehene Außenhülse zugeordnet, wobei die Außenhülse und die Haltescheibe einstückig hergestellt oder nachträglich zu einer Einheit verbunden sind.

Zweckmäßige Ausgestaltungen der Erfindung sind in den übrigen Unteransprüchen aufgezeigt.

Der erfindungsgemäße Ankerbolzen ist zur Aufnahme großer Lasten, insbesondere in weichen Materialien wie Gasbeton, bestens geeignet. Durch die Anordnung mindestens einer ringförmigen Sollbiegelinie auf dem Umfang der Spreizhülse erfolgt ein nahezu rechtwinkliges Aufbiegen der Dreiecksegmente. Außerdem ist die Möglichkeit geschaffen, daß auch bei relativ dünnen Bauelementen, z.B. bei Trapezblechen, ein Ankerbolzen fest angeschlossen werden kann. Durch die auf der Außenseite des Bauelements anliegende Haltescheibe wird ein Gegendruck zu den auf der Innenseite des Bauelements anliegenden aufgespreizten Dreiecksegmenten der Spreizhülse erreicht. Durch die Einbettung der Spreizhülse und des Spannbolzens in die Außenhülse, die auch nach der Aufspreizung der Dreiecksegmente existent ist, wird eine Isolierung gegen äußere Einflüsse erreicht.

Ein Ausführungsbeispiel der Erfindung ist in der Zeichnung dargestellt und wird nachfolgend näher beschrieben. Es zeigen:
- Fig. 1: eine Ansicht einer Spreizhülse und eines Spannbolzens vor der Montage;
- Fig. 2: einen Schnitt nach Linie II - II der Fig. 1;
- Fig. 3: eine Stirnansicht einer Spreizhülse im vergrößerten Maßstab und
- Fig. 4: einen Längsschnitt durch einen in einem Trapezblech gelagerten Ankerbolzen.

Der Spannbolzen 2 besitzt bekannterweise ein Außengewinde 5, an das sich ein kegelstumpfförmiger Kopfabschnitt 6 anschließt. Der Kopfabschnitt 6 geht über in einen zylindrischen Schaft 7, der je nach Verwendungszweck unterschiedliche Länge aufweisen kann. Zum Verdrehen des Spannbolzens 2 ist die Stirnseite mit entsprechenden Profilierungen 8 versehen.

Die Spreizhülse 1 besitzt einen polygonalen Querschnitt in Form eines Sechsecks. Das Innengewinde 9 der axialen Bohrung 10 in der Spreizhülse 1 dient zur Aufnahme des Außengewindes 5 des Spannbolzens 2. An das Innengewinde 9 schließt sich ein sektorförmig spreizbarer Verankerungsabschnitt 11 an.

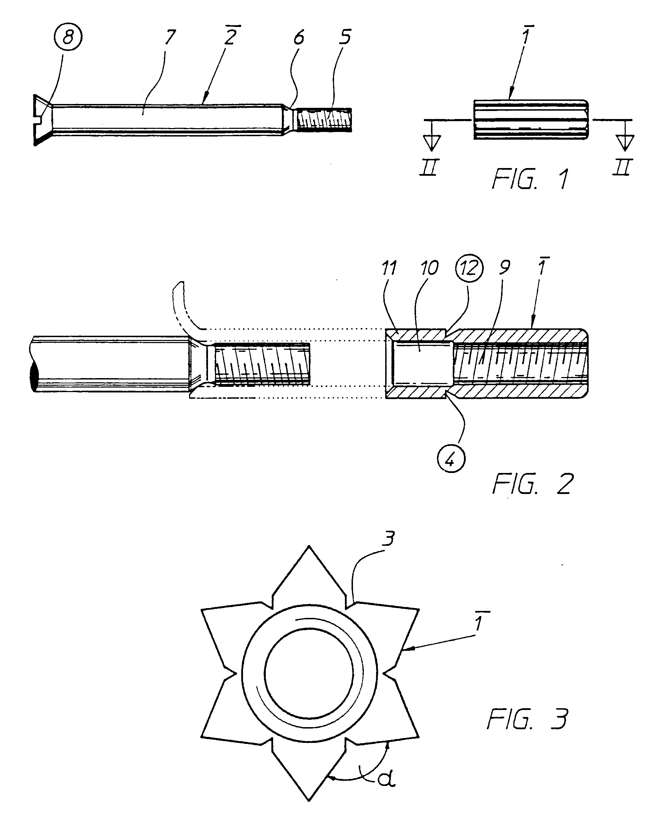

Gemäß Fig. 3 ist im Mittel bereich jeder Seite der Spreizhülse 1 eine achsparallele Sollbruchlinie 3 angeordnet. Von dieser Sollbruchlinie 3 aus steigen die anschließenden Teilseitenflächen zueinander unter einem stumpfen Winkel α nach außen an. Auf dem Umfang der Spreizhülse 1 ist eine umlaufende ringförmige Sollbiegelinie bzw.- kerbe 4 vorgesehen, die einen dreieckförmigen Querschnitt mit einer senkrecht zur Mantelfläche der Spreizhülse 1 verlaufende Kathete 12 aufweist.

Eine größere Ausbiegung des Verankerungsabschnitts 11 und damit eine verbesserte Verbundwirkung im Bohrloch wird erreicht, wenn der lichte Durchmesser am freien Ende des ausbiegbaren Verankerungsabschnitts 11 der Spreizhülse 1 gleich oder kleiner ist als der Durchmesser des Außengewindes 5 des Spannbolzens 2. Die Oberfläche der Spreizhülse 1 ist mit Profilierungen beliebiger Form versehen, wodurch der Reibungsbeiwert zwischen der Außenwandung der Spreizhülse 1 und der Bohrlochwandung vergrößert wird.

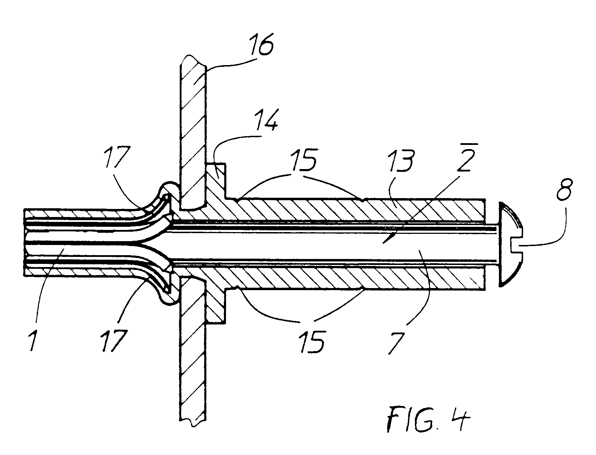

Nach Fig. 4 ist der Spannbolzen 2 mit seinem Außengewinde 5 in die mit einem Innengewinde 9 versehene Spreizhülse 1 eingeschraubt, so daß sich die Dreiecksegmente der Spreizhülse 1 aufspreizen und an die Innenfläche eines fest eingebauten Bauelements in Form eines Trapezblechs 16 anlegen. Die Spreizhülse 1 und der Spannbolzen 2 sind in einer Außenhülse 13 gelagert, die mit einer Haltescheibe 14 versehen ist. Die Außenhülse 13 und die Haltescheibe 14 sind einstückig aus einem verformbaren Material hergestellt, beispielsweise Kunststoff. Die Haltescheibe 14 kann runde oder eckige Form aufweisen, wobei der Durchmesser bzw. die kleinste Außenseite der Haltescheibe 14 mindestens die Größe der maximal aufweitbaren Dreiecksegmente 17 der Speizhülse 1 zur Herstellung der Verankerung aufweist. In Figur 4 ist eine einstückig an die Außenhülse 13 angeschlossene Haltescheibe 14 dargestellt, die über die äußere Begrenzung der aufgeweiteten Dreiecksegmente 17 reicht und dadurch ein ausreichender Gegendruck beim Anziehen des Spannbolzens 2 und dem damit verbundenen Aufspreizen der Dreiecksegmente 17 gegeben ist. Nach Beendigung des Spreizvorganges liegen die aufgeweiteten Dreiecksegmente 17 fest an dem an dieser Stelle durch die Haltescheibe 14 ausgesteiften Trapezblech 16 an. Durch die Haltescheibe 14 wird ein Gegendruck zum Druck der Dreiecksegmente 17 ausgeübt, so daß eine Verformung des Trapezbleches 16 vermieden und ein zur Aufnahme der vorgesehenen Belastung ausreichender Reibungsschluß erzielt wird.

Die Außenhülse 13 ist über die Haltescheibe 14 hinaus verlängert. Dieser verlängerte Teil, der im eingebauten Zustand aus dem Trapezblech 16 auskragt, weist mehrere durch Einkerbungen bzw. Einschnitte gebildete radial umlaufende Solltrennlinien 15 auf. Hierdurch kann je nach Erfordernis die Außenhülse 13 schnell abgelängt werden. Die Haltescheibe 14 ist zum Ansetzen eines Arretierungswerkzeuges mit Zusatzprofilierungen versehen. Hierdurch ist die Möglichkeit gegeben, daß beim Anziehen des Spannbolzens 2 ein Verdrehen der Außenhülse 13 ausgeschaltet wird.

Wie in Figur 4 dargestellt, ist die Wandung der aus verformbarem Material bestehenden Außenhülse 13 von der Haltescheibe 14 ausgehend bis zur Stirnseite des auskragenden Teils stärker ausgebildet. Der schwächere Teil der Wandung der Außenhülse 13, der im Bereich der Spreizhülse 1 verläuft, wird infolge der Aufspreizung der Dreiecksegmente 17 ausgedehnt. Hierdurch bleibt die durch die durchgehende Außenhülse 13 gebildete Isolierung gegen äußere Einflüsse auch im Bereich der Aufspreizung erhalten. Diese für den Einbauzustand wichtige durchgehende Isolierung ist auch dann erzielbar, wenn die Wandung der Außenhülse 13 nicht geschwächt ist. Allerdings ist dann zur Aufweitung der Wandung der Außenhülse 13 eine zusätzliche Kraftanstrengung erforderlich. Die innere Ausnehmung der Außenhülse 13 ist der äußeren Form der Spreizhülse 1 angepaßt. Die Außenhülse 13 kann nicht nur verkürzt, sondern durch formschlüssig und verdrehsicher anschließbare Verlängerungsstücke auch verlängert werden.

Zur Montage des Ankerbolzens wird der Gewindeabschnitt des Spannbolzens 2 zunächst leicht in die Spreizhülse 1 eingeschraubt und beide in die Außenhülse 13 eingeschoben. Die so vorbereitete Einheit wird in das Bohrloch des Trapezbleches 16 so weit eingeschoben, bis die Haltescheibe 14 plan an der Außenfläche des Trapezbleches 16 anliegt. Danach wird die Haltescheibe 14 durch ein geeignetes Werkzeug gegen Verdrehen gesichert und der Spannbolzen 2, der im Kopf eine entsprechende Profilierung 8 aufweist, soweit angezogen, bis die aufgespreizten Dreiecksegmente 17 mit einem ausreichenden Reibungsschluß auf der Innenseite des Trapezblechs 16 anliegen. Die Länge des zylindrischen Schaftes 7 des Spannbolzens 2 und die Länge des auskragenden Teils der Außenhülse 13 sind aufeinander abgestimmt. Der zylindrische Schaft 7 dient zusammen mit dem auskragenden Teil der Außenhülse 13 als Abstandhalter zum Befestigen von Gegenständen, die im Abstand vom Trapezblech 16 verlaufen müssen, z. B. Rohre.

### Aufstellung der Bezugszeichen:

- 1: Spreizhülse
- 2: Spannbolzen
- 3: Sollbruchlinie
- 4: Sollbiegelinie
- 5: Außengewinde
- 6: kegelstumpfförmiger Kopf
- 7: zylindrischer Schaft
- 8: Profilierung
- 9: Innengewinde
- 10: axiale Bohrung
- 11: Verankerungsabschnitt
- 12: Kathete
- 13: Außenhülse
- 14: Haltescheibe
- 15: Solltrennlinie
- 16: Trapezblech
- 17: Dreiecksegmente
- α: stumpfer Winkel

## Patentansprüche

1. Ankerbolzen zur Verankerung in einer Bohrung eines beliebigen Bauteils, mit einem Spannbolzen, der einen Gewindeabschnitt und einen anschließenden kegelstumpfförmigen Kopfabschnitt aufweist, sowie mit einer einen polygonalen Querschnitt aufweisenden Spreizhülse mit einem Innengewindeabschnitt und einem angrenzenden, beim Eindrehen des Spannbolzens in den Innengewindeabschnitt der Spreizhülse durch den kegelstumpfförmigen Kopfabschnitt des Spannbolzens sektorförmig spreizbaren Verankerungsabschnitt, wobei im Mittelbereich jeder Seite des Polygonals eine achsparallele Sollbruchlinie angeordnet ist, dadurch gekennzeichnet, daß die durch die Sollbruchlinie voneinander getrennten Teilseitenflächen der Spreizhülse (1) jeweils von der Sollbruchlinie (3) ausgehend nach außen zueinander unter einem stumpfen Winkel (α) ansteigend verlaufen.

2. Ankerbolzen nach Anspruch 1, dadurch gekennzeichnet, daß die Außenfläche der Spreizhülse (1) wendelförmig gezogen ist.

3. Ankerbolzen nach Anspruch 1 oder 2, dadurch gekennzeichnet, daß auf dem Umfang der Spreizhülse (1) mindestens eine ringförmig verlaufende Sollbiegelinie bzw.- kerbe (4), vorzugsweise dreieckförmigen Querschnitts, angeordnet ist.

4. Ankerbolzen nach Anspruch 3, dadurch gekennzeichnet, daß die Sollbiegelinie (4) eine senkrecht zur Mantelfläche der Spreizhülse (1) verlaufende Kathete (12) aufweist, die auf der zum freien Kopfende des Verankerungsabschnitts (11) weisenden Seite der Sollbiegelinie (4) angeordnet ist.

5. Ankerbolzen nach einem der Ansprüche 1 bis 4, dadurch gekennzeichnet, daß der lichte Durchmesser am freien Ende des ausbiegbaren Verankerungsabschnitts (11) der Spreizhülse (1) gleich oder kleiner ist als der Durchmesser des Außengewindes (5) des Spannbolzens (2).

6. Ankerbolzen nach einem der Ansprüche 1 bis 5, dadurch gekennzeichnet, daß der Spreizhülse (1) und dem Spannbolzen (2) eine mit einer Haltescheibe (14) versehene Außenhülse (13) zugeordnet ist, wobei die Außenhülse (13) und die Haltescheibe (14) einstückig hergestellt oder nachträglich zu einer Einheit verbunden sind.

7. Ankerbolzen nach Anspruch 6, dadurch gekennzeichnet, daß die Außenhülse (13) über die Haltescheibe (14) auskragend verlängert und aus einem verformbaren Material gebildet ist.

8. Ankerbolzen nach Anspruch 6 oder 7, dadurch gekennzeichnet, daß der Durchmesser bzw. die kleinste Außenseite der Haltescheibe (14) mindestens die Größe der maximal aufweitbaren Dreiecksegmente (17) der Spreizhülse (1) aufweist.

9. Ankerbolzen nach einem der Ansprüche 6 bis 8, dadurch gekennzeichnet, daß der auskragende Teil der Außenhülse (13) eine oder mehrere radial umlaufende Solltrennlinien (15) aufweist.

10. Ankerbolzen nach einem der Ansprüche 6 bis 9, dadurch gekennzeichnet, daß die Haltescheibe (14) mit Zusatzprofilierungen zum Ansetzen eines Arretierungswerkzeugs zum Schutz gegen ein Verdrehen versehen ist.

## Claims

1. Anchoring bolt for anchoring in a bore of any desired component, with a tensioning bolt, which displays a threaded portion and an adjoining frusto-conical head portion as well as with an expanding sleeve, which displays a polygonal cross-section, with an internally threaded portion and an adjoining anchoring portion which - on turning the tensioning bolt into the internally threaded portion of the expanding sleeve - is expandable in sector shape by the frusto-conical head portion of the tensioning bolt, wherein an intended fracture line is arranged parallelly to the axis in the middle region of each side of the polygon, characterised thereby, that the partial side surfaces of the expanding sleeve (1), which are each separated from the other by the intended fracture line (3), each start out each time from the intended fracture line (3) and extend rising outwardly at an obtuse angle (α) relative to the other.

2. Anchoring bolt according to claim 1, characterised thereby, that the outward surface of the expanding sleeve (1), is twisted in helical shape.

3. Anchoring bolt according to claim 1 or 2, characterised thereby, that at least one annularly extending intended bending line or notch (4), preferably of triangular cross-section, is arranged on the circumference of the expanding sleeve (1).

4. Anchoring bolt according to claim 3, characterised thereby, that the intended bending line (4) displays a cathetus (12), which extends perpendicularly to the envelope surface of the expanding sleeve (1) and is arranged on that side of the intended bending line (4), which faces towards the free head end of the anchoring portion (11).

5. Anchoring belt according to one of the claims 1 to 4, characterised thereby, that the clear diameter at the free end of the outwardly bendable anchoring portion (11) of the expanding sleeve (1) is equal to or smaller than the diameter of the external thread (5) of the tensioning bolt (2).

6. Anchoring bolt according to one of the claims 1 to 5, characterised thereby, that the expanding sleeve (1) and the tensioning bolt (2) are associated with an outer sleeve (13) provided with a retaining disc (14), wherein the outer sleeve (13) and the retaining disc (14) are made in one piece or subsequently connected into a unit.

7. Anchoring bolt according to claim 6, characterised thereby, that the outer sleeve (13) is prolonged to jut out beyond the retaining disc (14) and formed of a deformable material.

8. Anchoring bolt according to claim 6 or 7, characterised thereby, that the diameter or the smallest outward side of the retaining disc (14) displays at least the size of the maximally expandable triangular segments (17) of the expanding sleeve (1).

9. Anchoring bolt according to one of the claims 6 to 8, characterised thereby, that the projecting part of the outer sleeve (13) displays one or more radially encircling intended severing lines (15).

10. Anchoring bolt according to one of the claims 6 to 9, characterised thereby, that the retaining disc (14) is provided with additional profilings for the application of an arresting tool for protection against a relative rotation.

## Revendications

1. Goujon d'ancrage dans un perçage pratiqué dans n'importe quel élément de construction, avec un boulon de tension, qui présente une section filetée et une section de tête adjacente en forme de tronc de cône, ainsi qu'avec une douille expansible présentant une section transversale polygonale avec une section filetée intérieure et une section d'ancrage adjacente expansible en forme de secteurs, lors de l'enfoncement par rotation du boulon de tension dans la section filetée intérieure de la douille expansible à travers la section de tête en forme de tronc de cône du boulon de tension, une ligne destinée à la rupture parallèle à l'axe étant disposée dans la zone médiane de chaque côté du polygone, goujon d'ancrage caractérisé en ce que les surfaces latérales partielles de la douille expansible (1) séparées les unes des autres par la ligne destinée à la rupture s'étendent en partant respectivement de la ligne destinée à la rupture (3) vers l'extérieur en croissant les unes vers les autres en formant un angle d'obtus (α).

2. Goujon d'ancrage selon la revendication 1, caractérisé en ce que la surface extérieure de la douille expansible (1) est étirée en forme d'hélices.

3. Goujon d'ancrage selon la revendication 1 ou 2, caractérisé en ce que sur le pourtour de la douille expansible (1) on dispose au moins une ligne ou une entaille destinée au pliage s'étendant en forme d'anneau, de préférence avec une section transversale de forme triangulaire.

4. Goujon d'ancrage selon la revendication 3, caractérisé en ce que la ligne de consigne destinée au pliage (4) présente un côté d'angle droit (12) s'étendant perpendiculairement à la surface enveloppe de la douille expansible (1), côté qui est disposé sur le côté de la ligne de coinsigne destinée au pliage (4) tourné vers l'extrémité libre de tête de la section d'ancrage (11).

5. Goujon d'ancrage selon l'une des revendications 1 à 4, caractérisé en ce que le diamètre intérieur sur l'extrémité libre de la section d'ancrage dépliable (11) de la douille expansible (1) est égal à ou plus petit que le diamètre du filetage extérieur (5) du boulon de tension (2).

6. Goujon d'ancrage selon l'une des revendications 1 à 5, caractérisé en ce qu'à la douille expansible (1) et au boulon de tension (2) on associe une douille extérieure (13) pourvue d'une rondelle d'arrêt (14), la douille extérieure (13) et la rondelle d'arrêt (14) étant fabriquées d'une seule pièce ou étant reliées en une unité après coup.

7. Goujon d'ancrage selon la revendication 6, caractérisé en ce que la douille extérieure (13) est prolongée en saillie sur la rondelle d'arrêt (14) et est formée à partir d'une matière déformable.

8. Goujon d'ancrage selon la revendication 6 ou 7, caractérisé en ce que le diamètre ou le côté extérieur le plus petit de la rondelle d'arrêt (14) présente au moins la grandeur des segments triangulaires (17) déployables au maximum de la douille expansible (1).

9. Goujon d'ancrage selon une des revendications 6 à 8, caractérisé en ce que la partie saillante de la douille extérieure (13) présente une ou plusieurs lignes destinées à la séparation et faisant tout le tour (15).

10. Goujon d'ancrage selon l'une des revendications 6 à 9, caractérisé en ce que la rondelle d'arrêt (14) est pourvue de profils additionnels pour poser un outil de bocage protégeant contre toute rotation.
